# FASCICULE DE BREVET EUROPEEN

(11) **EP 3 646 002 B1**
(45) Date de publication et mention de la délivrance du brevet: **05.06.2024**
(21) Numéro de dépôt: 18749842.3
(22) Date de dépôt: 28.06.2018
(51) Int. Cl.: G01N 15/14, G01N 21/05, G01N 15/10

(54) **CUVE DE MESURE POUR LE DENOMBREMENT ET/OU LA CARACTERISATION DE CELLULES**
MESSKÜVETTE ZUR ZÄHLUNG UND/ODER CHARAKTERISIERUNG VON ZELLEN
MEASURING CUVETTE FOR COUNTING AND/OR CHARACTERIZING CELLS

(30) Priorité: 28.06.2017 FR 1755974
(43) Date de publication de la demande: 06.05.2020
(73) Titulaire: Diagdev, 34160 Castries (FR)
(72) Inventeur: MERCHEZ, Benoit, 34980 Combaillaux (FR)
(74) Mandataire: Plasseraud IP
(86) Numéro de dépôt international: PCT/FR2018/051605
(87) Numéro de publication internationale: WO 2019/002787

(56) Documents cités:
- FR-A1- 2 653 885
- FR-A1- 2 956 207
- FR-A1- 3 022 998
- US-A1- 2010 290 041

## Description

### Domaine technique

La présente invention concerne le domaine technique de la cytométrie en flux, notamment des accessoires pour cytométrie en flux tels que les cuves de mesure et les supports pour de telles cuves de mesure.

### État de la technique

La cytométrie en flux permet de nos jours de déterminer des caractéristiques et propriétés de cellules, par exemple leurs tailles, contenus intracellulaires, contenus en ADN, etc. Elle permet également l'étude de la variation et la distribution de ces caractéristiques au sein d'une population de cellules, aboutissant *in fine* à l'identification de sous populations parmi les cellules, comme par exemple la différentiation des différentes cellules composant le sang.

Par ailleurs, la cytométrie en flux est une méthode rapide. Typiquement, plusieurs milliers de cellules par minute sont caractérisées. Ainsi, elle permet le dénombrement et la caractérisation de sous-populations rares de cellules. La rareté de ces sous-populations ne permet généralement pas leur observation et caractérisation par microscopie, notamment dû à l'impossibilité d'obtenir un nombre de mesures réalisées sur ces sous-populations qui soit statistiquement acceptable.

En outre, grâce à l'amélioration des capteurs optiques ces dernières années et notamment de leur capacité à détecter des signaux de plus en plus faibles en intensité, il est possible à la fois de mesurer le volume d'une cellule et d'obtenir des informations sur son contenu cellulaire grâce d'une part à une mesure par impédance et d'autre part à une mesure optique.

La cytométrie en flux consiste principalement à faire passer individuellement des cellules dans une veine liquide de forte section par rapport à la taille des cellules. Cette veine liquide se termine par une buse présentant un orifice dimensionné pour empêcher le passage simultané ou trop rapproché dans le temps de deux voire plusieurs cellules. Le débit étant contant entre la veine liquide et l'orifice, le diamètre de la veine liquide diminuant, la vitesse des cellules augmente et en sortie de la buse, les cellules atteignent des vitesses de l'ordre de plusieurs milliers par seconde dans un jet de liquide ayant le diamètre de la buse.

La mesure du volume des cellules est réalisée en mesurant l'impédance de part et d'autre de l'orifice de la buse. En effet, le volume d'une cellule est corrélé avec une variation d'impédance qu'entraine son passage dans un milieu conducteur (système Coulter), la cellule étant considérée comme étant isolante électriquement. Le volume est déterminé de manière absolue, quelle que soit la forme de la cellule.

Par ailleurs, le passage des cellules à travers l'orifice de la buse assure un certain centrage hydrodynamique des cellules et également l'orientation de celles-ci.. Ainsi, il est possible de positionner précisément le jet sortant de la buse et contenant les cellules dans un faisceau lumineux émis par une source d'excitation. Lorsqu'une cellule traverse le faisceau lumineux, elle diffuse un certain nombre de signaux optiques utilisable par le cytomètre afin de déterminer les propriétés de la cellule. Ces signaux optiques comprennent :
- la réflexion de la lumière sur la cellule, due à la différence d'indices entre le liquide et la cellule, mais également entre les différents composants de la cellule, se traduisant par la réflexion d'une partie d'un rayon lumineux incident ;
- la réfraction de la lumière sur la cellule se traduisant par une déviation du rayon lumineux pénétrant dans la cellule ; et
- la diffraction de la lumière sur la cellule, principalement sous un angle solide allant de quelques degrés jusqu'à un angle solide de 360°.

Tous ces signaux sont recueillis par un système optique de collecte, puis séparés en fonction de leur longueur d'onde (largeur à mi-hauteur comprise entre 20 et 50 nm, voire 30 à 40 nm) par un système de filtres optiques et enfin parviennent à différents capteurs lumineux. Ces différents capteurs peuvent être adaptés pour :
- mesurer la diffusion aux petits angles (*forward scatter* en anglais) de la cellule ;
- mesurer la diffusion aux grands angles (*side scatter* en anglais) de la cellule ;
- mesurer l'absorbance de la cellule ; et
- mesurer la fluorescence de la cellule.

La diffraction aux petits angles est due à la diffusion d'une partie de la lumière incidente arrivant à la surface de la membrane cellulaire par cette dernière. La partie de la lumière diffusée a la même longueur d'onde que la lumière incidente. Elle est captée dans l'axe de la lumière incidente. Elle donne des informations sur la taille et l'indice de réfraction moyen de la cellule.

La diffraction aux grands angles est due à la diffusion dans toutes les directions de l'espace de la partie de la lumière incidente qui a traversé la membrane cellulaire par les organites intracellulaires. Elle peut être captée par un photomultiplicateur ou une photodiode à effet avalanche. Mettant en jeu les propriétés de réfraction et de réflexion, elle donne des informations sur l'hétérogénéité fine du contenu cellulaire.

L'absorbance nécessite une source d'excitation stable. Elle est proportionnelle au diamètre de la cellule et à l'indice d'absorption des organites intracellulaires.

Dans le cas où la cellule est marquée par un ou plusieurs fluorochromes, ces derniers émettent, lors de leur excitation, de la fluorescence à une ou plusieurs longueurs d'onde supérieure à celle de la source d'excitation dans toutes les directions de l'espace. Des filtres interférentiels permettent la séparation des différentes longueurs d'onde de la fluorescence (généralement en des spectres de largeur à mi-hauteur de 20 à 50 nm, voire 30 à 40 nm), chacune envoyée sur un photomultiplicateur. L'intensité de la fluorescence mesurée est fonction du nombre de molécules de fluorochromes fixées sur la cellule. Par exemple, dans le cas de l'utilisation du marqueur DRACQ 5 qui est un fluorochrome traversant passivement la membrane cytoplasmique des cellules et se fixant spécifiquement sur l'ADN, il est possible d'extraire des informations sur des cellules nucléées. Le marqueur DRACQ 5 présente deux maximums d'absorption à 622 nm et 676 nm et deux autres dans la zone des ultraviolets à 240 nm et 314 nm. Il émet de la fluorescence dans le rouge avec des longueurs d'ondes comprises entre 665 nm et 800 nm. Le filtre généralement utilisé est un filtre de type dichroïque qui réfléchit à 90° du faisceau incident toutes les composantes spectrales inférieures à 650 nm et transmet les composantes spectrales supérieures à 650 nm. Compte tenu de la définition de la source lumineuse, le premier filtre est naturellement centré à la longueur d'onde de la source lumineuse avec une bande passante de l'ordre de 50 nm. Ainsi, dans ce montage, il est possible de mesurer pour chaque particule trois grandeurs physiques : une mesure électrique représentative du volume de la particule, une mesure d'extinction liée à la réfringence de la cellule, et enfin une mesure de fluorescence liée au contenu en acides nucléiques de la cellule analysée.

La cytométrie en flux est avantageusement utilisée pour l'étude de l'hématologie permettant un diagnostic et un suivi thérapeutique de différents virus, infections et parasites, ainsi que l'étude fonctionnelle de cellules saines. Grâce à la cytométrie en flux, il est possible de compter et de caractériser les différents types de cellules sanguines.

Par exemple, la cytométrie en flux appliquée aux leucocytes permet de connaître leur nombre total et de les différencier selon leur morphologie et de les classer en trois types différents grâce à une mesure du volume cellulaire par impédance et une mesure d'absorption.

Un premier type est celui des monocytes qui sont des cellules de grandes tailles (20 à 40 µm de diamètre). La forme de leur noyau peut être arrondie, ovalaire, réniforme ou franchement irrégulière ; le cas le plus fréquent étant la forme réniforme. Leur chromatine est peu dense, non mottée, et de structure régulière. La durée de séjour des monocytes dans le sang est de 2 jours avant leur passage tissulaire et le temps de transit médullaire de 1 à 2 jours. Quand ils sont activés, ils deviennent des macrophages. Ils sont capables de phagocyter des bactéries, des cellules entières ainsi que diverses particules dites polluantes, comme par exemple des poussières.

Un deuxième type est celui des lymphocytes qui ont un rôle majeur dans le système immunitaire. Ils peuvent être séparés en deux groupes de tailles différentes :
- les lymphocytes de petite taille (7 à 9 µm de diamètre) qui présentent un noyau de forme arrondie ou ovalaire, parfois réniforme avec un cytoplasme peu étendu, clair ou légèrement basophile et s'étendant le plus souvent d'un seul côté du noyau ; et
- les lymphocytes de plus grande taille (9 à 15 µm de diamètre) qui présentent un noyau centré ou légèrement excentré avec un cytoplasme plus étendu que celui des lymphocytes de petite taille et entourant complètement le noyau.

Un troisième type, celui des granulocytes ou encore appelés polynucléaires, et dont la fonction principale est la protection contre les infections, peut être différencié en trois souscatégories.

Tout d'abord, les neutrophiles sont les granulocytes les plus abondants (environ 96 %). Ils sont de forme arrondie et ont un diamètre de 12 à 14 µm. Ils sont caractérisés par la forme plurilobée de leur noyau (de 3 à 5 lobes). Ils présentent une durée de séjour dans le sang de 2 jours avant leur passage tissulaire et un temps de transit médullaire des précurseurs granuleux de 10 à 14 jours. Il existe un compartiment de réserve médullaire de neutrophiles. Ils sont très efficaces dans la destruction des bactéries et prédominent lors d'inflammations de type aigu. Leur rôle essentiel est la défense de l'organisme contre les microorganismes étrangers, tels que bactéries et levures. Leurs fonctions excrétrices favorisent les réactions inflammatoires locales des tissus et contribuent à la défense de ceux-ci.

Ensuite, les basophiles sont très peu abondant et représentent seulement environ 0,5 % des leucocytes. Ils présentent un diamètre de 10 à 14 µm. Leur noyau bilobé est masqué par des granulations spécifiques qui sont assez nombreuses et dispersées dans toute la cellule. Leur durée de séjour dans le sang est de 12 à 24 heures, sans passage tissulaire connu. Le temps de transit médullaire serait identique à celui des neutrophiles. Une fonction importante des basophiles est d'attirer les éosinophiles.

Enfin, les éosinophiles représentent environ 2 à 5% des leucocytes circulants (350 éléments par millimètre-cube environ). Ce sont des cellules de 12 à 14 µm de diamètre caractérisées par un noyau bilobé et surtout par l'aspect des granulations qui sont sphériques (0,5 à 1,5 µm de diamètre). Ils contiennent des granules azurophiles. Les polynucléaires éosinophiles sont des cellules clés de l'inflammation allergique et de la défense antiparasitaire. Leur répartition est surtout tissulaire, la fraction circulante ne représentant que 1 % du nombre total des éosinophiles. Leur temps de transit dans le sang est de 3 à 8 heures après la sortie de la moelle et jusqu'à leur dépôt dans les tissus (notamment les intestins, les poumons, la peau et l'utérus) où ils auront une durée de vie d'une dizaine de jours.

Autre exemple, il est possible de déterminer le nombre total d'érythrocytes et de plaquettes, de les différencier selon leur morphologie et de les classer grâce à une mesure du volume cellulaire par impédance et une mesure de l'absorption.

D'autres applications de la cytométrie en flux présentent un intérêt diagnostique évident grâce à la caractérisation et/ou au dénombrement des différents types de cellules sanguines telles que les réticulocytes, les érythroblastes, cellules immatures et précurseurs des leucocytes, les lymphocytes activés ou encore des plaquettes réticulées.

La mesure du volume d'une cellule par impédance utilise un dispositif comprenant une cuve dont la base présente un orifice dont le diamètre de 50 µm environ permet le passage individuel d'une cellule dans un flux liquide. En amont de l'orifice, le flux liquide est formé d'un jet d'échantillon comprenant les cellules à caractériser et d'un jet de gainage (généralement de l'eau salée) entourant le jet d'échantillon permettant l'hydrofocalisation du jet d'échantillon. Les terminaux d'un voltmètre sont connectés électriquement à des électrodes, dont l'une est disposée en amont de l'orifice et l'autre en aval, des joints toriques étant nécessaires pour assurer l'étanchéité à ces niveaux. La variation de tension observée au moment du passage d'une cellule est représentative de son volume.

La base de la cuve est généralement fabriquée à partir d'un disque de quelques millimètres de diamètre et de quelques microns d'épaisseur réalisé dans des pierres précieuses comme le rubis synthétique très onéreux. L'orifice de passage est usiné dans ce disque puis le disque est serti manuellement sur l'extrémité d'une buse. L'opération de sertissage n'est pas sans risques car des microfissures peuvent apparaitre créant ainsi une modification de la résistivité entre les électrodes positive et négative faussant ainsi la mesure de l'impédance.

En ce qui concerne les mesures optiques, celles-ci utilisent un autre dispositif comprenant une cuve formée d'une base plate présentant en son centre un orifice dont le diamètre de 80 µm permet le passage individuel d'une cellule dans un flux liquide et d'une enceinte transparente plaquée contre la base. Entre l'enceinte et la base, un joint assure l'étanchéité entre ces deux pièces. Une entrée de gainage secondaire au niveau de la partie basse de l'enceinte juste au voisinage de la base permet l'arrivée d'un jet de gainage pour le gainage du flux d'échantillon afin de l'accompagner sur une longueur de 400 µm où le flux d'échantillon croise un faisceau lumineux émis par la source d'excitation. Un deuxième joint est nécessaire pour assurer l'étanchéité sur la partie supérieure de la cuve.

Afin de réaliser en même temps la mesure du volume et les mesures optiques, il est possible de combiner les deux dispositifs en un seul dispositif en utilisant la base du dispositif de mesure du volume comme base pour le dispositif de mesure optique. Cependant, un tel agencement nécessite l'utilisation de quatre joints. Par ailleurs, l'absence de fuites entre les différents éléments ne peut être garantie.

US 2010/290041 A1 présente une cuve de mesure avec une cuve monobloc adaptée à la fois à une mesure d'impédance et à une mesure optique.

FR 3 022 998 A1 présente une cuve de mesure avec un orifice monté sur le corps de buse.

### Présentation de l'invention

Un des objectifs de la présente invention est de palier au moins un des inconvénients de la technique antérieure. L'invention est exposée dans le jeu de revendications joint.

Pour cela, l'invention propose une cuve de mesure pour le dénombrement et/ou la caractérisation de cellules, notamment de cellules sanguines, la cuve de mesure comprenant une base et une enceinte latérale transparente s'étendant à partir de la base pour former avec celle-ci une chambre de mesures optiques ; la base présentant un orifice de passage de 30 à 100 µm de diamètre pour le passage de cellules, caractérisée en ce que la base et l'enceinte latérale transparente forment une cuve monobloc adaptée à la fois à une mesure d'impédance et à une mesure optique.

Grâce à cette cuve de mesure monobloc, il est possible de se passer de trois des quatre joints préalablement nécessaire pour une cuve de mesure permettant à la fois la mesure du volume des cellules et des mesures optiques. En effet, de par son caractère monobloc, la cuve de mesure n'a plus besoin de joints entre l'orifice de passage et la chambre de mesures optiques ainsi qu'entre l'électrode positive et la pièce servant à l'évacuation des différents liquides (liquide de gainage, Lyse...). Par ailleurs, cette cuve de mesure permet une mesure de volume par impédance et des mesures optiques sur une même cellule à quelques microsecondes d'intervalle.

La base présente une surface supérieure qui est la combinaison d'une surface latérale et d'une surface de plus petit rayon d'un tronc de cône, l'orifice de passage traversant la base au niveau d'une partie de celle-ci correspondant à la surface de plus petit rayon de la surface supérieure.

La base peut présenter une surface inférieure qui est la combinaison d'une surface latérale et d'une surface de plus petit rayon d'un tronc de cône, l'orifice de passage traversant la base au niveau d'une partie de celle-ci correspondant à la surface de plus petit rayon de la surface inférieure.

La base peut présenter, au niveau de la partie correspondant à la surface de plus petit rayon, une épaisseur comprise entre 40 et 100 µm.

La cuve peut comprendre en outre une arrivée de fluide présentant un orifice d'arrivée débouchant dans la chambre de mesure, l'orifice d'arrivé étant plus bas que l'orifice de passage.

L'enceinte peut présenter une surface extérieure sphérique dont le centre est à la sortie et à proximité de l'orifice de passage. Le centre de la surface extérieure sphérique peut être situé entre 200 et 600 µm de la sortie de l'orifice de passage.

La cuve peut comprendre en outre un logement de joint sur une surface supérieure de l'enceinte.

La cuve peut comprendre en outre un socle sous la base, le socle formant avec la base et l'enceinte la cuve monobloc ; dans laquelle le socle présente une surface latérale comprenant des éléments de centrage en V.

La présente invention propose également un système pour la caractérisation de cellules, notamment de cellules sanguines, comprenant la cuve de mesure telle que décrite ci-dessus et un support de cuve.

Le support de cuve peut présenter deux rainures se coupant à une intersection et dont le profil transversal est un V, l'intersection formant siège pour la cuve de mesure.

### Dessins

D'autres objectifs, caractéristiques et avantages apparaitront de la lecture de la description qui suit et donnée à titre illustratif et non-limitatif en référence aux dessins annexes, parmi lesquels :
- la figure 1 est une vue en trois-quarts d'une cuve de mesure selon l'invention ;
- la figure 2 est une vue en coupe suivant le plan P de la cuve de mesure de la figure 1 ;
- la figure 3 est une vue agrandie de l'orifice de passage illustré sur la figure 2 ;
- la figure 4 est une vue en coupe suivant le plan P d'une préforme aboutissant à la cuve de mesure de la figure 2 ;
- la figure 5 est une vue en trois-quarts de la cuve de mesure de la figure 1 sur son support de cuve ;
- la figure 6 est une vue en trois-quarts d'un système de mesure comprenant la cuve de mesure et le support de cuve de la figure 5 ainsi que les différentes optiques nécessaires aux mesures optiques ; et
- la figure 7 est une vue en coupe suivant le plan P indiqué sur la figure 6 et passant par le centre optique du système de mesure ;
- le figure 8 est un organigramme montrant les étapes d'un procédé de fabrication de la cuve de mesure de la figure 1.

### Description

Dans l'ensemble du présent exposé, les termes spatiaux sont déterminés par rapport à la cuve de mesure dans sa position normale d'utilisation.

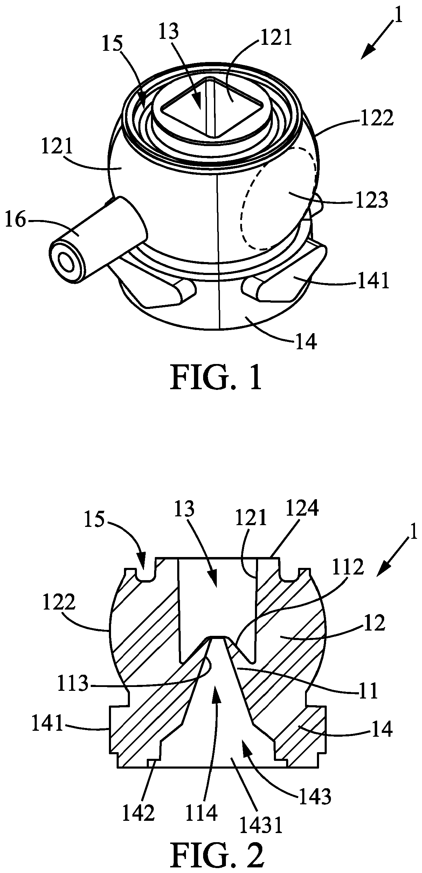

***Cuve de mesure.*** Une cuve de mesure **1** pour le dénombrement et/ou la caractérisation de cellules selon la présente invention sera décrite ci-après en référence aux figures 1 à 4.

La cuve de mesure **1** comprend une base **11** et une enceinte **12** latérale transparente s'étendant à partir de la base **11** pour former avec celle-ci une chambre de mesures optiques **13 ;** la base présentant un orifice de passage **111** de 30 à 100 µm de diamètre pour le passage de cellules. La base **11** et l'enceinte **12** forment une cuve monobloc adaptée à la fois à une mesure d'impédance et à une mesure optique.

L'orifice de passage **111** présente avantageusement un diamètre moyen de 40 à 80 µm, voire de 50 à 60 µm. L'orifice de passage **111** est avantageusement cylindrique à base circulaire. Cette dernière forme a pour avantage de ne pas perturber les mesures. En effet, les orifices obtenus par micro-usinage à l'aide d'un laser du marché présentent une conicité naturelle due au profil énergétique gaussien du faisceau émis par le laser. Or, un orifice tronconique modifie, parfois considérablement, la forme des impulsions que créée une cellule lorsque celle-ci passe au travers de l'orifice tronconique en modifiant surtout la largeur de l'impulsion.

La base **11** peut par ailleurs présenter une surface supérieure **112** qui est la combinaison d'une surface latérale **1121** et d'une surface de plus petit rayon **1122** d'un tronc de cône, de préférence d'un cône de révolution, aussi appelé cône circulaire droit. L'angle au sommet du cône correspondant est préférentiellement compris entre 20° et 60°. Le plus petit rayon peut être compris entre 0,5 et 1,5 mm, de préférence environ 1 mm. L'orifice de passage **111** traverse alors la base **11** au niveau d'une partie de celle-ci correspondant à la surface de plus petit rayon **1122** de la surface supérieure **112.** Ainsi, la surface supérieure **112** de la base **11** pénètre dans la chambre de mesures optiques **13.** La pénétration de la surface supérieure **112** de la base **11** dans la chambre de mesures optiques **13** permet aux mesures d'être réalisées dans un espace ouvert contrairement à des cuves dans lesquelles les mesures sont réalisées dans un espace confiné correspondant à la section de l'orifice de passage. La réalisation de mesures dans un espace ouvert présente l'avantage de faciliter le nettoyage de la zone de mesure par rinçage. La pente du tronc de cône permet l'accommodation de l'ouverture optique tout en rapprochant le plus possible la sortie de l'orifice de passage **111** d'un point de focalisation des rayons lumineux provenant d'une source d'excitation (voir plus loin).

En outre ou alternativement, la base **11** peut par ailleurs présenter une surface inférieure **113** qui est la combinaison d'une surface latérale **1131** et d'une surface de plus petit rayon **1132** d'un tronc de cône, de préférence d'un cône de révolution. L'angle au sommet du cône correspondant est préférentiellement compris entre 20° et 60°. L'orifice de passage **111** dans ce cas traverse alors la base **11** au niveau d'une partie de celle-ci correspondant à la surface de plus petit rayon **1131** de la surface inférieure **113.** Ainsi, la surface inférieure **113** de la base **11** définie une chambre convergente **114** à partir d'une entrée représentée par la base de plus grand rayon du tronc de cône jusqu'à l'orifice de passage **111.** Une telle configuration permet le gainage d'un flux d'échantillon contenant des cellules à dénombrer et/ou caractériser et dirigé centralement vers l'orifice de passage **111** par un flux de gainage injecté latéralement vers la surface de plus faible rayon **1132** assurant ainsi un centrage hydrodynamique précis du jet d'échantillon. Cette configuration est connue sous le nom de « hydrofocalisation ».

Lorsque la base **11** présente à la fois une surface supérieure **112** et une surface inférieure **113** telles que décrites ci-dessus, celles-ci sont centrée l'une par rapport à l'autre de manière à ce que l'entrée de l'orifice de passage **111** sur la surface inférieure **113** et la sortie de l'orifice de passage **111** sur la surface supérieure **112** soient situées sur leur axe longitudinal commun.

De préférence, la base **11** présente, au voisinage de l'orifice de passage **111,** une épaisseur comprise entre 40 et 100 µm, notamment au niveau de la partie correspondant aux surfaces de plus petit rayon **1122, 1132** de ses surfaces supérieure **112** et inférieure **113.** Avantageusement, cette épaisseur est comprise entre 50 et 80 µm, entre 55 et 70 µm, ou est d'environ 60 µm.

L'enceinte **12** peut présenter une surface intérieure **121** dont la forme est celle de la surface latérale d'un cylindre droit à base carrée. Le côté du carré formant la base de la surface latérale est préférentiellement choisi entre 3 et 7 mm, voire entre 4 et 6 mm, voire entre 4,5 et 5,5 mm, préférentiellement environ 5 mm. D'autres formes pour la base peuvent être choisies, telles que circulaire, triangulaire, etc. De préférence la forme de la base est une figure géométrique régulière, *i.e*. présentant au moins un élément de symétrie, de préférence un centre de symétrie ou un axe de symétrie.

En outre ou alternativement, l'enceinte **12** présente une surface extérieure **122** sphérique dont le centre de la sphère correspondante est situé à la sortie et à proximité de l'orifice de passage **111.**

La combinaison d'une surface extérieure **122** sphérique et d'une surface intérieure **121** cylindrique droite à base carrée forme trois voire quatre lentilles convergentes **123,** chacune correspondant à une face de la surface intérieure **121** et dont le point focal est le centre de la sphère correspondant à la surface extérieure **122** sphérique. Ainsi, la cuve de mesure **1** intègre dans sa structure ces lentilles ce qui permet de baisser le cout total du système de mesure en exemptant l'utilisateur de devoir disposer des lentilles convergentes entre d'une part la cuve de mesure et d'autre part la source d'excitation et les capteurs, et de devoir procéder à des réglages correspondants. Par ailleurs, une telle structure réduit significativement l'aberration sphérique du système de mesure, garantissant un maximum de puissance au point de mesure. En outre, une ouverture numérique de l'ordre de 0,5 peut être obtenue sans utilisation d'objectifs, contrairement aux dispositifs du marché.

Par ailleurs, la disposition du point focal des lentilles **123** à la sortie et à proximité de l'orifice de passage **111** permet des mesures optiques sur la cellule alors qu'elle vient de sortir de celui-ci et que le centrage du flux d'échantillon est le meilleur. En effet, plus l'on s'éloigne de la sortie de l'orifice de passage et plus la position de la cellule est incertaine et le risque qu'elle soit excentrée par rapport au jet d'échantillon est grand.

Ainsi, le centre de la surface extérieure **122** sphérique est de préférence situé entre 200 et 600 µm, voire 300 et 500 µm, voire 350 et 450 µm, de préférence environ à 400 µm, de la sortie de l'orifice de passage **111** dans la direction du flux d'échantillon, notamment parallèlement à l'axe longitudinal des surfaces supérieure **112** et inférieure **113** de la base **11** lorsque celles correspondent à des combinaisons de surfaces latérales et de plus faible rayon de tronc de cône de révolution.

Par ailleurs, l'enceinte **12** peut comprendre sur une surface supérieure **124** de celle-ci un logement de joint **15** pour la réception d'un joint, préférentiellement torique.

La cuve de mesure **11** peut en outre comprendre une arrivée de fluide **16** présentant un orifice d'arrivée débouchant dans la chambre de mesure **13.** L'orifice d'arrivé est disposée plus bas que l'orifice de passage **111.** Cette arrivée de fluide permet un deuxième gainage du flux d'échantillon en sortie de l'orifice de passage **111.** En outre, cette arrivée de fluide permet d'empêcher la formation de volume de recirculation en balayant la zone, empêchant une cellule sortant du jet d'échantillon en aval et à distance de la sortie de l'orifice de passage **111** là où le gainage est moins efficace, de recirculer en boucle et de gêner ainsi les mesures optiques effectuées sur les cellules subséquentes. Par ailleurs, la combinaison entre l'arrivée de fluide **16** et une surface supérieure **112** de la base **11** correspondant à la combinaison des surface latérale **1121** et de plus petit rayon **1122** d'un tronc de cône a pour avantage de guider le fluide de deuxième gainage vers la sortie de l'orifice de passage **111.**

La cuve de mesure **1** peut comprendre en outre un socle **14** sous la base **11.** Le socle **14** forme avec la base **11** et l'enceinte **12** la cuve monobloc. Le socle **14** présente un trou **143** qui débouche sur la chambre convergente **114.** Sur le côté extérieur **1431** du trou, un épaulement **142** peut être prévu pour la réception d'un joint torique.

Le diamètre du trou **143** sur son côté extérieur **1431** peut être supérieur au diamètre du cercle formant la base du tronc de cône de la surface inférieure **113** de la base **11,** par exemple il peut être compris entre 400 et 700 µm, entre 450 et 650 µm, entre 500 et 600 µm, de préférence environ 550 µm. Le diamètre du trou **143** diminue ensuite progressivement jusqu'à atteindre celui du cercle formant la base du tronc de cône de la surface inférieure **113** de la base **11.**

Par ailleurs, le socle **14** présente une surface latérale comprenant des éléments de centrage en V **141.** Ces éléments de centrage en V **141** coopèrent avec des rainures d'un support de cuve décrit plus loin. De préférence, la surface latérale du socle comprend deux éléments de centrage en V **141** dont les plans moyens s'intersectent, de préférence perpendiculairement. Avantageusement, la surface latérale du socle comprend deux paires d'éléments de centrage en V **141.** Les plans moyens de deux éléments de centrage en V d'une même paire sont parallèles alors que les plans moyens de deux éléments de centrage en V de paires différentes s'intersectent, de préférence perpendiculairement. Avantageusement, les plans moyens d'une paire d'éléments de centrage en V **141** sont parallèles à deux faces opposées de la surface intérieure **121** cylindrique droite à base carrée.

Ces éléments de centrage en V **141** sont des éléments en saillie et dont la pointe du V est dirigée vers le bas, c'est-à-dire dans le sens orienté de l'enceinte vers le socle. De préférence, la pointe du V est rabotée. Le rabotage de la pointe du V permet d'éviter un mauvais positionnement de la cuve de mesure **1** dû à une bavure éventuelle sur la pointe lors de la fabrication de la cuve de mesure **1.**

Avantageusement, la cuve monobloc présente de préférence un indice de réfraction compris entre 1,4 et 1,6. Par ailleurs, le plastique est préférentiellement choisi de manière à présenter une transmission supérieure à 90 % de la longueur d'onde de fonctionnement, de préférence de faible biréfringence et de faible distorsion à la chaleur.

Par ailleurs, le matériau de la cuve monobloc est avantageusement choisi de manière à présenter une faible résistance à l'absorption de l'eau (par exemple inférieure à 0,01 %). En outre, le matériau présente préférablement une faible constante diélectrique (par exemple au maximum 3 F/m) à des fréquences inférieures à 3 MHz, voire inférieures à 1 MHz, afin de garantir une bonne isolation électrique entre les électrodes de part et d'autre de l'orifice de passage.

Le matériau de la cuve monobloc est avantageusement du plastique. Ainsi, la cuve monobloc est obtenue par moulage permettant de réduire drastiquement le cout de la cuve de mesure par rapport aux cuves de mesure de l'état de la technique antérieure. Le matériau de la cuve monobloc peut comprendre principalement une résine polycyclooléfine, notamment plus de 95 % en poids de cette résine, voire plus de 99,5 % en poids de cette résine. Un exemple d'une telle résine est le Zeonex E48R (2015) de chez Zeon^{®}. Une telle résine est très liquide sous forme fondue pouvant être injectée à très forte pression avec un très faible rétreint et permettant de contrôler précisément les dimensions de la cuve monobloc et une rugosité de surface de qualité optique.

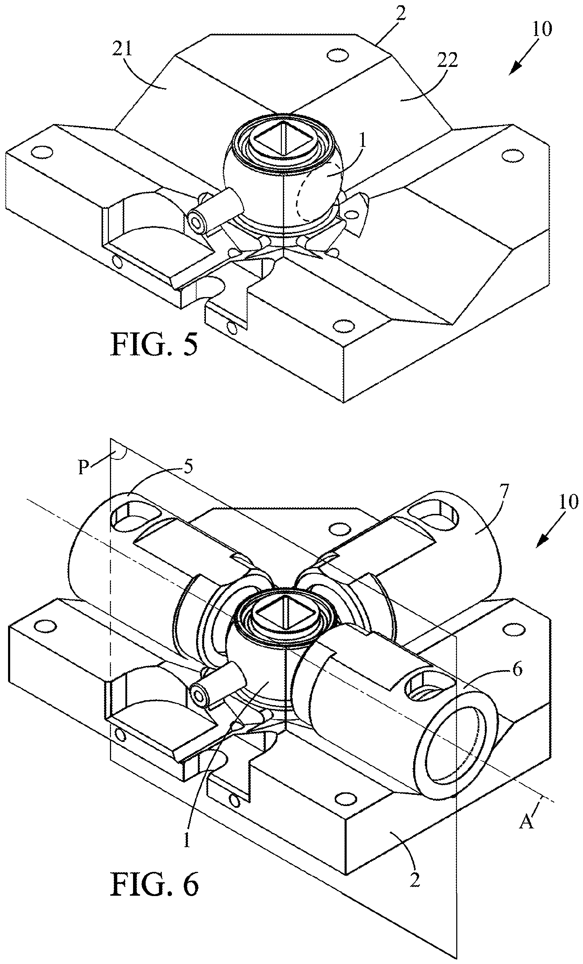

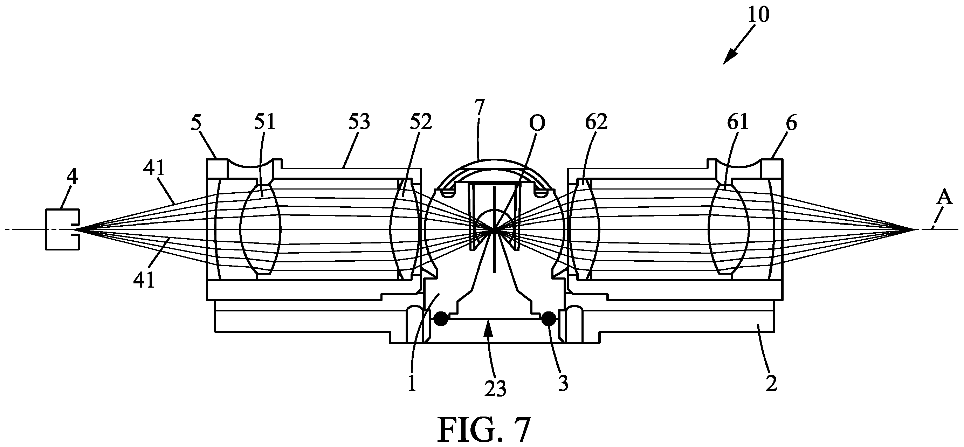

***Système de mesure.*** Un système de mesure pour le dénombrement et/ou la caractérisation de cellules selon l'invention est décrit ci-après en référence aux figures 5 à 7.

Le système de mesure **10** comprenant la cuve de mesure **1** telle que décrite ci-dessus.

En outre, le système de mesure **10** comprend un support de cuve **2** pour la réception de la cuve de mesure **1** et son maintien pendant les mesures. Le support de cuve **2** peut avantageusement présenter, quand la cuve de mesure **1** présente des éléments de centrage en V **141,** deux rainures **21, 22** s'intersectant, de préférence perpendiculairement, à une intersection et dont le profil transversal est un V correspondant à la forme des éléments de centrage en V **141** de la cuve de mesure **1.** L'intersection forme un siège pour la cuve de mesure **1.** L'angle d'intersection entre les deux rainures **21, 22** correspond à l'angle d'intersection des plans moyens des éléments de centrage en V **141.**

Par ailleurs, le support de cuve **2** présente au niveau de l'intersection un orifice **23** pour recevoir le jet de gainage et le jet d'échantillon. Cet orifice **23** est adapté pour être en communication fluidique avec la chambre convergeante **114** lorsque la cuve de mesure **1** est placée sur le support de cuve **2.** En outre, le système de mesure **10** peut comprendre un joint torique **3** à disposer entre la cuve de mesure **1** et le support de cuve **2.**

Le système de mesure **10** peut comprendre en outre un ensemble de mesure d'impédance incluant une électrode positive et une électrode négative pour la mesure d'impédance.

Le système de mesure **10** peut comprendre en outre un ensemble de mesures optiques comportant une source d'excitation **4** pour l'émission d'une lumière vers la cuve de mesure **1.** Un axe optique **A** est défini à partir de la source d'excitation **4** comme la direction moyenne des rayons lumineux **41** qu'elle émet. La disposition de la source d'excitation **4** est choisie de manière à ce que l'axe optique **A** passe par le centre **O** de la surface extérieure sphérique **122** de l'enceinte **12** lorsque la cuve de mesure **1** est en place.

La source d'excitation **4** est de préférence une source incohérente. Ainsi, la mise en forme des rayons lumineux **41** est facilitée et à moindre cout par rapport aux systèmes antérieurs nécessitant des lasers. En effet, le flux d'échantillon présente une largeur de quelques micromètres. La cellule de diamètre inférieure à la largeur du flux d'échantillon peut se situer n'importe où sur cette largeur. L'utilisation d'une source d'excitation **4** de faible cohérence permet la formation d'une zone éclairée de manière homogène au niveau du point de mesure, qui est le centre **O** de la surface extérieure sphérique **122** de l'enceinte **12,** comprenant la largeur du flux d'échantillon. Ainsi, le signal optique arrivant au capteur sera le même quelle que soit la position de la cellule dans le flux d'échantillon.

La source d'excitation **4** peut être choisie parmi : une diode électroluminescente et lampe à incandescence. La source d'excitation de préférence présente un spectre d'émission centré sur une longueur d'onde comprise entre 620 et 680 nm, 635 et 665 nm, avantageusement environ 650 nm.

L'ensemble de mesures optiques peut comprendre en outre une optique de mise en forme **5** en entrée sur l'axe optique **A.** Cette optique de mise en forme **5** en entrée est à disposer entre la source d'excitation **4** et la cuve de mesure **1.** L'optique de mise en forme **5** permet de convertir les rayons lumineux **41** émis radialement par rapport à la source d'excitation **4** et arrivant sur la première optique de mise en forme **5** en rayons lumineux parallèles à l'axe optique **A.** Pour cela elle comprend un premier groupe optique **51** formant lentille convergente. Afin d'améliorer la focalisation des rayons lumineux au centre **O** de la surface extérieure sphérique **122** de l'enceinte **12,** un deuxième groupe optique **52** formant lentille convergente peut également être prévu afin de réaliser une première convergence des rayons lumineux vers le centre **O** de la surface extérieure sphérique **122** de l'enceinte **12.** La combinaison du deuxième groupe optique **52** et des lentilles convergentes **123** de la cuve **1** permet de garantir à la fois une aberration sphérique minimale au centre **O** de la surface extérieure sphérique **122** de l'enceinte **12,** un maximum de puissance en ce point **O** et une ouverture numérique maximale. L'intégration d'une lentille **123** à la cuve de mesure **1** permet de gagner en cout ; sans cette lentille **123,** il aurait été nécessaire de l'intégrer dans l'optique de mise en forme. Le premier groupe optique **51,** et le cas échéant également le deuxième groupe optique **52,** est préférablement contenu dans un carter **53** de forme générale cylindrique à base circulaire pour un positionnement facilité en hauteur et angulaire sur la rainure **21** du support de cuve **2.**

L'optique de mise en forme **5** en entrée est également adaptée pour former l'image d'un réticule au voisinage de la sortie de l'orifice de passage **111** lorsque la cuve de mesure **1** est en place. Le cas échéant, l'image du réticule est formée sur un plan comprenant le centre **O** de la surface extérieure sphérique **122** de l'enceinte **12.** Pour cela, l'ensemble de mesures optiques comprend en outre un réticule rectangulaire entre la source d'excitation **41** et l'optique de mise en forme **5** en entrée. De préférence, le facteur d'aspect (rapport de la longueur sur la largeur) est inférieur ou égal à 3. L'optique de mise en forme en entrée est adaptée par exemple pour former un réticule rectangulaire de longueur autour de 100 µm et de largeur avoisinant 30 µm.

De préférence, l'optique de mise en forme **5** en entrée est adaptée pour que les rayons lumineux **41** convergeant forment un angle solide important, par exemple entre 30° et 50°. Grâce à cette grande ouverture rendue possible notamment par la forme tronconique de la surface supérieure **112** de la base de la cuve de mesure **1,** il est possible de collecteur un maximum de lumière en sortie.

L'ensemble de mesures optiques peut comprendre un module de mesure d'absorbance comportant un capteur adapté pour mesurer l'absorbance de la cellule et une première optique de réception **6** en sortie afin de converger les rayons lumineux traversant la cuve de mesure **1** et arrivant sur la première optique de réception **6** vers le capteur. De préférence, le capteur et la première optique de réception **6** sont disposés sur l'axe optique **A** sur le côté opposé de la source d'excitation **41** par rapport à la cuve de mesure **1,** la première optique de réception **6** est à disposer entre la cuve de mesure **1** et le capteur. Dans certain cas, le capteur et la première optique de réception **6** peuvent être disposés en dehors de l'axe optique **A,** auquel cas, un déflecteur est disposé sur l'axe optique **A** et sur le chemin des rayons lumineux **41** entre la cuve de mesure **1** et la première optique de réception **6.** Le capteur est préférentiellement une photodiode.

Bien que ce ne soit pas obligatoire, de préférence, la première optique de réception **6** présente une même ouverture que l'optique de mise en forme **5** en entrée afin de minimiser les coûts par la symétrisation du système.

L'ensemble de mesures optiques peut comprendre un module de mesure de diffusion comportant un capteur adapté pour mesurer la diffusion aux grands angles de la cellule et une deuxième optique de réception **7** en sortie afin de converger les rayons lumineux **41** diffusés par la cuve et arrivant sur la deuxième optique de réception **7,** vers le capteur. De préférence, le capteur et la deuxième optique de réception **7** sont disposés sur un axe perpendiculaire à l'axe optique **A,** parallèle au support de cuve et passant par le centre **O** de la surface extérieure sphérique **122** de l'enceinte **12** lorsque la cuve de mesure **1** est en place. Dans certain cas, le capteur et la deuxième optique de réception **7** peuvent être disposés en dehors de l'axe perpendiculaire à l'axe optique, auquel cas, un déflecteur est disposé sur l'axe perpendiculaire à l'axe optique **A** et sur le chemin des rayons lumineux **41** entre la cuve de mesure **1** et la deuxième optique de réception **7.** Le capteur est préférentiellement une photodiode à effet avalanche.

L'ensemble de mesures optiques peut comprendre un module de mesure de fluorescence comportant un capteur adapté pour mesurer la fluorescence de la cellule et une troisième optique de réception (non représentée) en sortie afin de converger les rayons lumineux diffusés par la cuve et arrivant sur la troisième optique de réception, vers le capteur. De préférence, le capteur et la troisième optique de réception sont disposés sur un axe perpendiculaire à l'axe optique, parallèle au support de cuve et passant par le centre de la surface extérieure sphérique de l'enceinte lorsque la cuve de mesure est en place. Dans certain cas, le capteur et la troisième optique de réception peuvent être disposés en dehors de l'axe perpendiculaire à l'axe optique, auquel cas, un déflecteur est disposé sur l'axe perpendiculaire à l'axe optique et sur le chemin des rayons lumineux entre le support de cuve et la troisième optique de réception. Le capteur est préférentiellement une photodiode à effet avalanche.

Dans le cas où l'ensemble de mesures optiques comprend à la fois un module de mesure de diffusion aux grands angles et un module de mesure de fluorescence, l'un peut être sur l'axe perpendiculaire à l'axe optique et l'autre en dehors. Auquel cas, le déflecteur correspondant est un miroir dichroïque.

Alternativement, les deux modules peuvent être en dehors de l'axe perpendiculaire à l'axe optique. Auquel cas, le déflecteur le plus proche du support de cuve est un miroir dichroïque. Le déflecteur le plus éloigné pouvant être soit un miroir semi-réfléchissant, soit un vrai miroir.

Toujours alternativement, un miroir dichroïque peut être ajouté au module de mesure de diffusion aux grands angles pour permettre la mesure d'une ou plusieurs fluorescences tout en utilisant les mêmes composants du système de mesure **10.** Le miroir dichroïque est disposé entre le support de cuve et la deuxième optique de réception. Par ailleurs, des filtres optiques dichroïques peuvent être prévus pour séparer les signaux optiques de fluorescence de différentes longueurs d'onde, généralement en des spectres de largeur à mi-hauteur de 20 à 50 nm, voire 30 à 40 nm. Auquel cas, ils sont disposés entre le miroir dichroïque et le capteur de fluorescence.

Dans l'ensemble du présent exposé, les termes « d'optique de mise en forme » et « optique de réception » doivent être compris comme désignant une lentille ou un ensemble de lentilles permettant de changer la direction des rayons lumineux. De préférence, toutes les optiques de mise en forme et de réception sont identiques. C'est-à-dire qu'elles comprennent toutes un premier groupe optique et un deuxième groupe optique ; ce dernier étant à disposer plus près de la cuve de mesure **1** que le premier groupe optique.

De préférence, chacun des optiques de réception **6, 7** présente un carter de forme cylindrique à base circulaire, tout comme l'optique de mise en forme **5,** pour leur positionnement en hauteur et angulaire sur le support de cuve **2.** Ces éléments de centrage en V peuvent être prévus pour coopérer avec des rainures **21, 22** correspondant du support de cuve **2,** qui peuvent être les mêmes que celles utilisées pour le positionnement de la cuve de mesure **1.**

La cuve de mesure **1** et/ou le support de cuve **2** sont avantageusement adaptés pour qu'une face de la surface intérieure cylindrique droite à base carrée de l'enceinte soit normale à l'axe optique. Auquel cas, les optiques de mise en forme sont disposées soit sur l'axe optique, sur un axe perpendiculaire à celui-ci et passant par le centre de la surface extérieure sphérique de l'enceinte lorsque la cuve de mesure est en place.

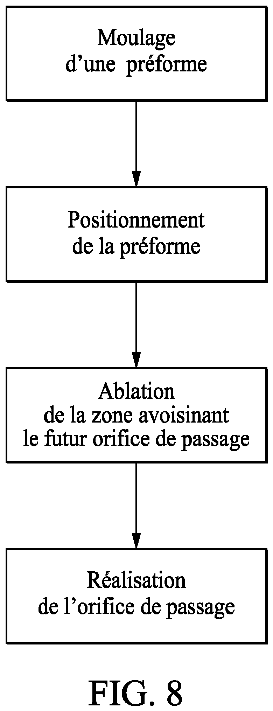

***Procédé de fabrication de la cuve de mesure.*** Un procédé de fabrication de la cuve de mesure est décrit ci-après en référence aux figures 2, 4 et 8.

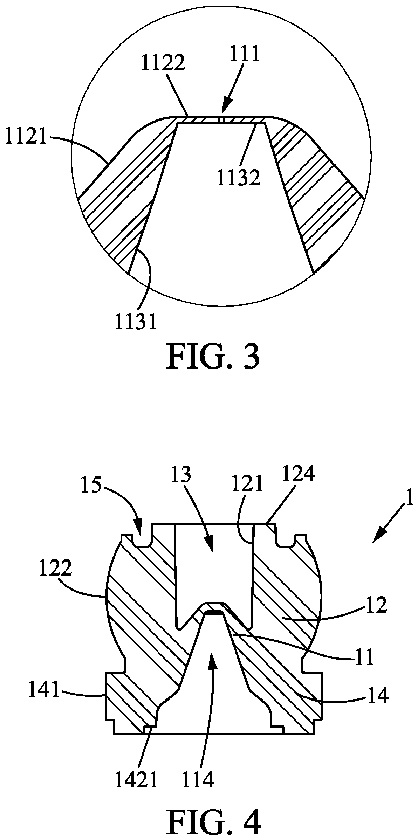

Le procédé comprend le moulage d'une préforme dont la forme et généralement celle de la cuve de mesure à l'exception de la base (voir figure 4). Notablement, l'orifice de passage n'est pas encore formé et l'épaisseur de la zone de la base avoisinant le futur orifice de passage n'a pas encore atteint la finesse souhaitée. L'épaisseur avoisinante est comprise entre 400 et 600 µm, voire entre 450 et 550 µm, voire 475 et 525 µm, préférablement environ 500 µm.

Le procédé comprend également l'ablation de la zone de la base avoisinant le futur orifice de passage sur une profondeur suffisante de manière à laisser une épaisseur comprise entre 40 et 100 µm, entre 50 et 80 µm, entre 55 et 70 µm, ou d'environ 60 µm. L'ablation étant réalisée à l'aide d'impulsion ultra courte. Avantageusement, l'ablation de la zone de la base avoisinant le futur orifice de passage est réalisée à l'aide d'un laser dont le faisceau est préférablement envoyé sur la surface inférieure de la base. De préférence, de l'ablation résulte un cercle d'ablation de diamètre compris entre 0,6 et 1,4 mm. Le contrôle de l'épaisseur de cette zone (qui est l'épaisseur avoisinant l'orifice de passage) est important d'un point de vue dimensionnel afin de garantir une mesure de résistivité de qualité. En effet, l'épaisseur de l'orifice de passage est directement liée aux largeurs des impulsions qui sont créées par une cellule lorsque celle-ci passe au travers de l'orifice de passage. Si l'épaisseur est trop importante et non contrôlée, il y a un risque que plusieurs cellules passent au travers de l'orifice de passage en même temps et donc génèrent un artéfact de mesure sur les linéarités.

Le procédé comprend ensuite la réalisation de l'orifice de passage au micro usinage laser, par exemple selon le procédé décrit dans le document WO 2017/029210, permettant d'obtenir un orifice parfaitement cylindrique pour la mesure d'impédance.

Le procédé peut comprendre optionnellement le positionnement de la préforme sur un outillage de positionnement entre les étapes de moulage et d'ablation, permettant son maintien pendant les étapes d'ablation et de réalisation de l'orifice de passage. L'outillage de positionnement peut notamment comprendre un support de positionnement présentant sur sa surface supérieure un renfoncement dont la forme est complémentaire à celle de la cuve.

## Revendications

1. Cuve de mesure (1) pour le dénombrement et/ou la caractérisation de cellules, la cuve de mesure (1) comprenant une base (11) et une enceinte (12) latérale transparente s'étendant à partir de la base (11) pour former avec celle-ci une chambre de mesures optiques (13) ; la base (11) présentant un orifice de passage (111) de 30 à 100 µm de diamètre pour le passage de cellules,
dans laquelle la base (11) et l'enceinte (12) latérale transparente forment une cuve (1) monobloc adaptée à la fois à une mesure d'impédance et à une mesure optique, et dans laquelle la base (11) présente une surface supérieure (112) qui est la combinaison d'une surface latérale (1121) et d'une surface de plus petit rayon (1122) d'un tronc de cône, l'orifice de passage (111) traversant la base (11) au niveau d'une partie de celle-ci correspondant à la surface de plus petit rayon (1122) de la surface supérieure (112), de sorte à ce que la surface supérieure (112) de la base (11) pénètre dans la chambre de mesures optiques (13).

2. Cuve de mesure (1) selon la revendication 1, dans laquelle la base (11) présente une surface inférieure (113) qui est la combinaison d'une surface latérale (1131) et d'une surface de plus petit rayon (1132) d'un tronc de cône, l'orifice de passage (111) traversant la base (11) au niveau d'une partie de celle-ci correspondant à la surface de plus petit rayon (1132) de la surface inférieure (113), la surface inférieure (113) de la base (11) définissant ainsi une chambre convergente (114) à partir d'une entrée représentée par la base de plus grand rayon du tronc de cône jusqu'à l'orifice de passage (111).

3. Cuve de mesure (1) selon la revendication 1 ou la revendication 2, dans laquelle la base (11) présente, au niveau de la partie correspondant à la surface de plus petit rayon (1122, 1132), une épaisseur comprise entre 40 et 100 µm.

4. Cuve de mesure (1) selon l'une des revendications 1 à 3, comprenant en outre une arrivée de fluide (16) présentant un orifice d'arrivée débouchant dans la chambre de mesure (13), l'orifice d'arrivé étant plus bas que l'orifice de passage (111).

5. Cuve de mesure (1) selon l'une des revendications 1 à 4, dans laquelle l'enceinte (12) présente une surface extérieure (122) sphérique dont le centre est à la sortie et à proximité de l'orifice de passage (111).

6. Cuve de mesure (1) selon la revendication 5, dans laquelle le centre de la surface extérieure (122) sphérique est situé entre 200 et 600 µm de la sortie de l'orifice de passage (111).

7. Cuve de mesure (1) selon l'une des revendications 1 à 6, comprenant en outre un logement de joint (15) sur une surface supérieure (124) de l'enceinte.

8. Cuve de mesure (1) selon l'une des revendications 1 à 7, comprenant en outre un socle (14) sous la base (11), le socle (14) formant avec la base (11) et l'enceinte (12) la cuve monobloc (1) ; dans laquelle le socle (14) présente une surface latérale comprenant des éléments de centrage en V (141).

9. Système (10) pour la caractérisation de cellules, comprenant la cuve de mesure (1) selon l'une des revendications 1 à 8 et un support de cuve (2).

10. Système (10) selon la revendication 9, dans lequel la cuve de mesure (1) est selon la revendication 8, dans lequel le support de cuve (2) présente deux rainures (21, 22) se coupant à une intersection et dont le profil transversal est un V, l'intersection formant siège pour la cuve de mesure (1).

## Patentansprüche

1. Messküvette (1) zur Zählung und/oder Charakterisierung von Zellen, wobei die Messküvette (1) eine Basis (11) und eine transparente seitliche Einfassung (12) umfasst, die sich von der Basis (11) aus erstreckt, um mit dieser eine Kammer für optische Messungen (13) zu bilden ; wobei die Basis (11) eine Durchgangsöffnung (111) mit einem Durchmesser von 30 bis 100 µm für den Durchgang von Zellen aufweist, wobei die Basis (11) und die transparente seitliche Einfassung (12) eine einteilige Küvette (1) bilden, die sowohl für eine Impedanzmessung als auch für eine optische Messung ausgebildet ist, wobei die Basis (11) eine obere Fläche (112) aufweist, die eine Kombination aus einer Seitenfläche (1121) und einer Fläche mit kleinerem Radius (1122) eines Kegelstumpfes ist, und wobei die Durchgangsöffnung (111) die Basis (11) an einem Teil davon durchquert, der der Fläche mit dem kleineren Radius (1122) der oberen Fläche (112) entspricht, so dass die obere Fläche (112) der Basis (11) in die Kammer (13) für optische Messungen eindringt.

2. Messküvette (1) nach Anspruch 1, wobei die Basis (11) eine untere Fläche (113) aufweist, die eine Kombination aus einer Seitenfläche (1131) und einer Fläche mit kleinerem Radius (1132) eines Kegelstumpfes ist, wobei die Durchgangsöffnung (111) an einem Teil davon durch die Basis (11) verläuft, der der Fläche mit dem kleineren Radius (1132) der unteren Fläche (113) entspricht, wodurch die untere Fläche (113) der Basis (11) eine konvergierende Kammer (114) von einem durch die Basis mit dem größeren Radius des Kegelstumpfs dargestellten Einlass bis zur Durchgangsöffnung (111) definiert.

3. Messküvette (1) nach Anspruch 1 oder Anspruch 2, wobei die Basis (11) an dem Teil, der der Fläche mit dem kleinsten Radius (1122, 1132) entspricht, eine Dicke zwischen 40 und 100 µm aufweist.

4. Messküvette (1) nach einem der Ansprüche 1 bis 3, ferner umfassend einen Fluideinlass (16), der eine in die Messkammer (13) mündende Einlassöffnung aufweist, wobei die Einlassöffnung tiefer liegt als die Durchlassöffnung (111).

5. Messküvette (1) nach einem der Ansprüche 1 bis 4, wobei die Einfassung (12) eine kugelförmige Außenfläche (122) aufweist, deren Mittelpunkt am Auslass und in der Nähe der Durchgangsöffnung (111) liegt.

6. Messküvette (1) nach Anspruch 5, wobei der Mittelpunkt der kugelförmigen Außenfläche (122) zwischen 200 und 600 µm vom Ausgang der Durchgangsöffnung (111) entfernt ist.

7. Messküvette (1) nach einem der Ansprüche 1 bis 6, ferner umfassend eine Dichtungsaufnahme (15) auf einer oberen Fläche (124) der Einfassung.

8. Messküvette (1) nach einem der Ansprüche 1 bis 7, ferner umfassend einen Sockel (14) unter der Basis (11), wobei der Sockel (14) zusammen mit der Basis (11) und der Einfassung (12) die einteilige Küvette (1) bildet; wobei der Sockel (14) eine Seitenfläche aufweist, die V-förmige Zentrierelemente (141) umfasst.

9. System (10) zur Charakterisierung von Zellen, umfassend die Messküvette (1) nach einem der Ansprüche 1 bis 8 und einen Küvettenhalter (2).

10. System (10) nach Anspruch 9, wobei die Messküvette (1) nach Anspruch 8 gebildet ist, wobei der Küvettenhalter (2) zwei Nuten (21, 22) aufweist, die sich an einem Schnittpunkt schneiden und deren Querprofil ein V ist, wobei der Schnittpunkt einen Sitz für die Messküvette (1) bildet.

## Claims

1. Measurement cuvette (1) for enumerating and/or characterising cells, particularly blood cells, the measurement cuvette (1) comprising a base (11) and a transparent lateral enclosure (12) extending from the base (11) so as to form therewith an optical measurement chamber (13); the base (11) having a through-orifice (111) of 30 to 100 µm in diameter for cells to pass through, wherein the base (11) and the transparent lateral enclosure (12) form a one-piece cuvette (1) suitable both for impedance measurement and for optical measurement; and the base (11) has an upper surface (112) which is the combination of a lateral surface (1121) and a surface of lesser radius (1122) of a frustum, the through-orifice (111) traversing the base (11) at a portion thereof corresponding to the surface of lesser radius (1122) of the upper surface (112), so that the upper surface (112) of the base (11) penetrates the optical measurement chamber (13).

2. Measurement cuvette (1) according to claim 1, wherein the base (11) has a lower surface (113) which is the combination of a lateral surface (1131) and a surface of lesser radius (1132) of a frustum, the through-orifice (111) traversing the base (11) at a portion thereof corresponding to the surface of lesser radius (1132) of the lower surface (113), the lower surface (113) of the base (11) thus defining a convergent chamber (114) from an input represented by the base of greater radius of the frustum up to the through-orifice (111).

3. Measurement cuvette (1) according to claim 1 or claim 2, wherein the base (11) has, at the portion corresponding to the surface of lesser radius (1122, 1132), a thickness between 40 and 100 µm.

4. Measurement cuvette (1) according to one of claims 1 to 3, further comprising a fluid intake (16) having an intake orifice opening into the measurement chamber (13), the intake orifice being lower than the through-orifice (111).

5. Measurement cuvette (1) according to one of claims 1 to 4, wherein the enclosure (12) has a spherical outer surface (122), the centre whereof is at the exit and in the vicinity of the through-orifice (111).

6. Measurement cuvette (1) according to claim 5, wherein the centre of the spherical outer surface (122) is situated between 200 and 600 µm from the exit of the through-orifice (111).

7. Measurement cuvette (1) according to one of claims 1 to 6, further comprising a seal housing (15) on an upper surface (124) of the enclosure.

8. Measurement cuvette (1) according to one of claims 1 to 7, further comprising a sub-base (14) under the base (11), the sub-base (14) forming with the base (11) and the enclosure (12) the one-piece cuvette (1); wherein the sub-base (14) has a lateral surface comprising V-shaped centring elements (141).

9. System (10) for characterising cells, comprising the measurement cuvette (1) according to one of claims 1 to 8 and a cuvette support (2).

10. System (10) according to claim 9, wherein the measurement cuvette (1) is according to claim 8, wherein the cuvette support (2) has two grooves (21, 22) intersecting at an intersection and wherein the transversal profile is a V, the intersection forming a seat for the measurement cuvette (1).
